# EUROPÄISCHE PATENTSCHRIFT

(11) **EP 3 623 791 B1**
(45) Veröffentlichungstag und Bekanntmachung des Hinweises auf die Patenterteilung: **03.11.2021**
(21) Anmeldenummer: 18194577.5
(22) Anmeldetag: 14.09.2018
(51) Int. Cl.: G01M 99/00, B65B 69/00, B65D 41/34, G01L 5/00, B29D 99/00, B65B 57/04

(54) **VORRICHTUNG ZUM PRÜFEN EINER VERBINDUNG EINES GARANTIEBANDS EINER ORIGINALITÄTSSICHERUNG EINES VERSCHLUSSDECKELS MIT EINEM DECKELGRUNDKÖRPER**
DEVICE FOR TESTING A CONNECTION BETWEEN A TAMPER-EVIDENT RING OF A TAMPER-EVIDENT CLOSURE PROVIDED IN A CLOSURE CAP AND A LID BASE BODY
DISPOSITIF DE CONTRÔLE D'UN RACCORDEMENT D'UNE BANDE D'INVIOLABILITÉ D'UNE PROTECTION D'ORIGINALITÉ D'UN COUVERCLE DE FERMETURE AVEC UN CORPS DE BASE DE COUVERCLE

(43) Veröffentlichungstag der Anmeldung: 18.03.2020
(73) Patentinhaber: PackSys Global AG, 3400 Burgdorf (CH)
(72) Erfinder: BURRI, Gregor, 8340 Hinwil (CH); HÜRLIMANN, Martin, 3373 Röthenbach (CH)
(74) Vertreter: Keller Schneider Patent- und Markenanwälte AG (Bern)

(56) Entgegenhaltungen:
- JP-A- 2004 028 957
- JP-A- 2012 189 536
- Anonymous: "Closure force | Mecmesin Closure Testing", , 27. März 2017 (2017-03-27), XP055562728, Gefunden im Internet: URL:https://web.archive.org/web/2017032702 4648/https://www.closuretesting.com/method s/closure-force [gefunden am 2019-02-27]

## Beschreibung

### Technisches Gebiet

Die Erfindung betrifft eine Vorrichtung zum Prüfen einer Verbindung eines Garantiebands einer Originalitätssicherung eines Verschlussdeckels mit einem Deckelgrundkörper. Die Vorrichtung umfasst ein Mitnahmeelement zum Ergreifen des Garantiebands, ein Anschlagelement für den Deckelgrundkörper, wobei das Mitnahmeelement und das Anschlagelement derart relativ zueinander beweglich sind, dass eine Abreisskraft auf das Garantieband ausübbar ist, und eine Kraftmessvorrichtung zur Messung der Abreisskraft während der Relativbewegung des Garantiebands und des Deckelgrundkörpers. Die Erfindung betrifft weiter eine Anlage zum Schneiden eines Garantiebands zur Originalitätssicherung eines Verschlussdeckels mit einer solchen Vorrichtung zum Prüfen.

### Stand der Technik

Eine Originalitätssicherung stellt sicher, dass unmittelbar erkennbar ist, wenn ein Verschlussdeckel nach der Erstbefüllung eines Behälters zwischenzeitlich entfernt und wieder angebracht wurde. Dies könnte ein Hinweis auf einen Austausch oder eine Verunreinigung des Behälterinhalts sein und zeigt dem Nutzer an, dass er den Behälterinhalt nicht nutzen - ein Lebensmittel also beispielsweise nicht konsumieren - sollte.

Es sind verschiedene Arten von Originalitätssicherungen bekannt, wobei die Wahl des jeweiligen Typs namentlich von der Art des Behälters abhängt. Ein Typ Originalitätssicherungen beinhaltet ein Garantieband, welches über eine Schwächungslinie an einem Grundkörper des Verschlussdeckels angeordnet ist. Beim Entfernen des Verschlussdeckels (z. B. durch Abschrauben) wirkt das Garantieband derart mit einem Gegenstück am Behälter zusammen, dass es vom Deckelgrundkörper abgerissen und/oder entlang seines Umfangs durchtrennt wird. In beiden Fällen ist angesichts des beschädigten bzw. nicht mehr vorhandenen Garantiebandes ersichtlich, dass der Verschlussdeckel (zwischenzeitlich) entfernt wurde.

Bekannte Originalitätssicherungen, z. B. an Flaschenverschlüssen mit Deckeln aus Kunststoff oder Metallblech, umfassen Garantiebänder, die über eine Mehrzahl von Stegen am Deckelgrundkörper angebracht sind, wobei der Grundkörper, die Stege und der Ring einstückig ausgebildet sind. Sie umfassen weiter einen umlaufenden wulstartigen Vorsprung am Behälter, welcher das Garantieband beim Entfernen des Deckels zurückhält.

Die Schwächungslinie kann während des Formens des Deckels mit eingebracht werden oder erst in einem nachträglichen Schnitt, z. B. durch das Einbringen von geeigneten Schlitzen. In beiden Fällen sollte sichergestellt werden, dass die Garantiebänder die gestellten Anforderungen (z. B. hinsichtlich einer zum Ab- bzw. Aufreissen benötigten Kraft) erfüllen. Dazu werden stichprobenweise Deckel der Produktion entnommen und geprüft. Bisher erfolgte die Prüfung in der Regel manuell bzw. mit manuell bedienten, speziell ausgerüsteten Zug-Dehnungs-Messgeräten, wobei die Abreisskraft mit Hilfe eines Kraftsensors gemessen und die zum Abreissen (oder Aufreissen) benötigte Kraft bestimmt wurde. Liegt diese Kraft ausserhalb eines vorgegebenen Bereichs (welcher u. a. von der Art des Behälters und dem Material sowie der Geometrie des Deckels abhängig ist), liegt ein Fehler im Herstellungsprozess vor, der zu beheben ist, z. B. durch die Anpassung von Betriebsparametern und/oder den Austausch von Werkzeugen.

Die bisherige manuelle Kontrolle war zeitaufwendig, auch weil die abgerissenen Garantiebänder oft auf einem Anschlagstück für den Deckelgrundkörper aufgefädelt wurden und spätestens nach einigen Messungen vom Nutzer manuell entfernt werden mussten. Weitere Verzögerungen ergaben sich auch deshalb, weil die zu prüfenden Stichproben zunächst von der Fertigungslinie in ein Labor transportiert werden mussten. Aufgrund der verzögerten Bereitstellung des Messergebnisses ergaben sich bei entdeckten Fehlern hohe Ausschusszahlen.

Es sind Vorrichtungen bekannt, mit denen die Kraftmessung zumindest teilweise automatisierbar ist. So beschreibt die JP 2012 189536 A (Daiwa Can Co Ltd.) eine Prüfvorrichtung für eine Verbindung eines Garantiebands einer Originalitätssicherung eines Verschlussdeckels mit einem Deckelgrundkörper. Die Prüfvorrichtung umfasst wiederum ein Mitnahmeelement zum Ergreifen des Garantiebands und ein Anschlagelement für den Deckelgrundkörper, wobei das Mitnahmeelement und das Anschlagelement derart relativ zueinander beweglich sind, dass eine Abreisskraft auf das Garantieband ausübbar ist. Die Vorrichtung umfasst weiter eine Kraftmesseinheit zur Messung der Abreisskraft während der Relativbewegung des Garantiebands und des Deckelgrundkörpers.

Die JP 2004 028957 A (Crown Cork Japan) offenbart ebenfalls eine Prüfvorrichtung für eine Verbindung eines Garantiebands einer Originalitätssicherung eines Verschlussdeckels mit einem Deckelgrundkörper. Die Prüfvorrichtung umfasst ein Mitnahmeelement zum Ergreifen des Garantiebands und ein Anschlagelement für den Deckelgrundkörper, wobei das Mitnahmeelement und das Anschlagelement derart relativ zueinander beweglich sind, dass eine Abreisskraft auf das Garantieband ausübbar ist. Ferner umfasst die Prüfvorrichtung eine Kraftmesseinheit zur Messung der Abreisskraft während der Relativbewegung des Garantiebands und des Deckelgrundkörpers. Die Prüfvorrichtung weist zudem eine Trennvorrichtung zum Durchtrennen des Garantiebandes auf. Damit wird vor der Messung der Abreisskraft das Garantieband in mehrere Segmente zerschnitten. So kann jeder Steg des Garantiebands einzeln auf seine Abreisskraft hin überprüft werden.

Eine weitere Prüfvorrichtung wird von der Firma Mecmesin vertrieben und ist auf der Seite https:// web.archive.org/web/20170327024648/https://www.closuretesting.com/methods/closure-force veröffentlicht.

Diese Prüfvorrichtung besitzt einen Dorn, auf welchen ein Verschlussdeckel aufgesteckt wird, wobei das Garantieband über einen Haltering geschoben wird, welcher den Dorn hülsenförmig umgibt. Der Dorn wird abwärts bewegt, bis das Garantieband abreisst und die dazu nötige Kraft gemessen. Danach kann das Garantieband manuell vom Haltering abgezogen werden.

### Darstellung der Erfindung

Aufgabe der Erfindung ist es, eine dem eingangs genannten technischen Gebiet zugehörende Vorrichtung zum Prüfen einer Verbindung eines Garantiebands einer Originalitätssicherung eines Verschlussdeckels mit einem Deckelgrundkörper zu schaffen, welche eine schnelle Prüfung ermöglicht.

Die Lösung der Aufgabe ist durch die Merkmale des Anspruchs 1 definiert. Gemäss der Erfindung umfasst die Vorrichtung eine Trennvorrichtung zum Durchtrennen des Garantiebandes nach dem Abreissen vom Deckelgrundkörper.

Beim Mitnahmeelement kann es sich um eine wulstartige Struktur handeln, welche im Wesentlichen der Struktur am Behälter entspricht, mit welchem der Verschlussdeckel zusammenwirken soll. Das Mitnahmeelement kann aber auch durch mehrere beabstandete Strukturen, z. B. Nocken, gebildet sein. In beiden Fällen werden der Verschlussdeckel mit angebrachtem Garantieband und das Mitnahmeelement vor der Messung der Abreisskraft so relativ zueinander positioniert, dass das Garantieband das Mitnahmeelement zumindest bereichsweise hintergreift. Dazu kann - insbesondere bei einem Mitnahmeelement mit fixer Form - der Verschlussdeckel mit Garantieband über das Mitnahmeelement aufgeschoben bzw. das Mitnahmeelement in den Verschlussdeckel eingeschoben werden. Mitnahmeelemente mit veränderlicher Form, z. B. mit radial beweglichen Krallen, lassen sich in den Deckelinnenraum einführen und werden erst dann gespreizt. Weiter sind auch Greifelemente, z. B. mit zangenartigen Klemmmechanismen, einsetzbar, die das Garantieband umlaufend oder an beabstandeten Stellen erfassen.

Das Anschlagelement wirkt insbesondere mit einem Boden des Deckelgrundkörpers (also mit der Deckelinnenseite) zusammen. Es sind auch Ausführungen möglich, bei welchen das Anschlagelement mit einem Element an der Deckelinnenseite, z. B. einer Dichtlippe oder mit der Deckelaussenseite zusammenwirkt und z. B. eine Vakuumglocke umfasst.

Als Abreisskraft wird hier eine Kraft verstanden, die so am Garantieband angreift und in eine solche Richtung wirkt, dass - bei einem ausreichenden Wert (der "zum Abreissen erforderlichen Kraft") - das Garantieband vom Deckelgrundkörper abgerissen und/oder entlang seines Umfangs aufgerissen wird.

Die Messung der Abreisskraft umfasst bevorzugt die Aufnahme eines Kraft-Zeit- bzw. Kraft-Weg-Verlaufs mindestens bis zum Abreissen des Garantiebands. Alternativ wird aber nur eine maximale Abreisskraft gemessen bzw. gespeichert oder weitergegeben; diese entspricht im Wesentlichen der erwähnten zum Abreissen erforderlichen Kraft.

Das Durchtrennen des Garantiebands führt zu einer erheblichen Vereinfachung der Abfuhr des Garantiebands von der Prüfvorrichtung, insbesondere dann wenn die Prüfvorrichtung derart ausgebildet ist, dass die abgerissenen Garantiebänder auf ein Element aufgefädelt werden. Das Durchtrennen ermöglicht dann einen Abtransport, der nicht zwingend axial entlang des Elements erfolgen muss.

Das Durchtrennen ist nicht nur dann sinnvoll, wenn das Garantieband als Ganzes vom Deckelgrundkörper abgerissen wird, sondern auch dann, wenn es beim Öffnungsvorgang entlang des Umfangs durchtrennt wird. Wenn durch das Durchtrennen mehrere Abschnitte gebildet werden, lösen sich diese "im Wesentlichen linearen" Teile im Gegensatz zu Abschnitten, die einen Winkel von mehr als 180° beschreiben, ohne Weiteres von anderen Elementen.

Das Anschlagelement ist stirnseitig an einem Dorn ausgebildet, und das Mitnahmeelement umschliesst den Dorn hülsenförmig und ist entlang einer Dornlängsrichtung linear relativ zum Dorn beweglich. Der Dorn hat insbesondere die Geometrie eines geraden Kreiszylinders, wobei der Durchmesser etwas kleiner ist als der Innendurchmesser des Verschlussdeckels. Die stirnseitige Fläche des Dorns ist derart ausgebildet, dass sie mit dem Deckelgrundkörper zusammenwirken kann. Der Boden oder eine andere Partie des Deckelgrundkörpers wirkt auf der Deckelinnenseite mit der stirnseitigen Fläche zusammen und definiert die axiale Position des Deckelgrundkörpers. Durch eine Relativbewegung zwischen Dorn und Mitnahmeelement, bei welcher sich das Mitnahmeelement von der Stirnseite des Dorns weg bewegt, wird eine Abreisskraft auf das Garantieband ausgeübt. Die koaxiale Anordnung von Dorn und hülsenförmigem Mitnahmeelement ermöglicht eine stabile und einfache Lagerung des Mitnahmeelements und eine definierte Weiterbewegung des abgetrennten Garantiebandes, indem dieses weiter vom Dorn geführt wird und auf diesem zunächst aufgefädelt bleibt.

Weil das Garantieband anschliessend aufgeschnitten wird, kann es unmittelbar vom Dorn entfernt werden. Es kann somit grundsätzlich eine unbeschränkte Anzahl von Messungen durchgeführt werden. Dies im Gegensatz zum Fall, in welchem zunächst mehrere Garantieringe auf dem Dorn aufgefädelt bleiben.

Bevorzugt umfasst die Trennvorrichtung mindestens ein im Umfangsbereich des Dorns angeordnetes Schneidmesser, welches derart ausgebildet ist, dass das Garantieband bei einer Bewegung über das Schneidmesser, entlang der Dornlängsrichtung, zerschnitten wird. Beim Schneidvorgang ist das Garantieband auf dem hülsenförmigen Mitnahmeelement gelagert, so dass bei entsprechender Zustellung des Schneidmessers ein sicherer Schnitt erfolgt. Das Schneidmesser kann relativ zum Dorn fix angeordnet werden, die notwendige Relativbewegung ergibt sich aus der axialen Bewegung des hülsenförmigen Mitnahmeelements relativ zum Dorn (und damit zum Schneidmesser).

Alternativ werden bewegliche Schneidmesser oder Schneidscheiben bzw. andersartige Trennwerkzeuge, z. B. beheizte Schwerter oder Laserwerkzeuge, eingesetzt.

Bevorzugt umfasst die Trennvorrichtung mindestens zwei Schneidmesser, welche derart angeordnet sind, dass das Garantieband an zwei umfangsmässig beabstandeten Stellen durchtrennt wird. Beispielsweise können zwei Schneidmesser vorgesehen werden, die einander gegenüberliegend angeordnet sind (also einen Winkel von 180° einschliessen). Auch möglich ist es, drei oder mehr Schneidmesser einzusetzen, die bevorzugt gleichmässig entlang des Umfangs angeordnet sind.

Zwei oder mehr Teile des Garantiebandes, welche durch das Durchtrennen entstehen, lassen sich deutlich einfacher und zuverlässiger abtransportieren als ein einziges (durchschnittenes) Band. Bei einem Durchtrennen in mehrere Teile lassen sich diese beispielsweise auch auf einfache Weise absaugen.

Mit Vorteil weist das hülsenförmige Mitnahmeelement mindestens eine Nut in Dornlängsrichtung auf, welche mit dem mindestens einen Schneidmesser zusammenwirkt. Die Nut auf der Aussenseite des Mitnahmeelements ermöglicht ohne Weiteres ein Passieren des Schneidmessers, ohne dass das Mitnahmeelement oder das Schneidmesser bewegliche Teile aufweisen muss. Gegenüber einem mehrteiligen Mitnahmeelement, dessen Teile jeweils zwischen den Schneidmessern angeordnet sind, ergibt sich eine einfachere Konstruktion mit verbesserter Stabilität.

Mit Vorteil weist die Dornlängsrichtung zu einer horizontalen Ebene einen Winkel von mindestens 30° auf, wobei eine Bewegung in Dornlängsrichtung zur Messung der Abreisskraft nach oben erfolgt und wobei die Vorrichtung eine Auffangeinrichtung für den Deckelgrundkörper und das abgerissene Garantieband umfasst, welche unterhalb des Dorns temporär in eine Auffangposition beweglich ist. Wenn die Längsrichtung des Dorns eine substanzielle vertikale Komponente aufweist, können der Deckelgrundkörper und das Garantieband mit Hilfe der Schwerkraft vom Dorn weg befördert werden. Zusätzliche Fördermittel in der unmittelbaren Nachbarschaft des Dorns (wie Absaugvorrichtungen oder Magnete bei der Verarbeitung von Verschlussdeckeln aus ferromagnetischen Materialien) erübrigen sich. Die Auffangeinrichtung stellt sicher, dass die vom Dorn nach unten fallenden Grundkörper und Bänder für den Abtransport sicher aufgefangen werden. Dass sie nur temporär in die Auffangposition bewegt wird, ermöglicht die ungehinderte Beschickung des Dorns mit dem nächsten Verschlussdeckel.

Mit Vorteil weist die Auffangeinrichtung eine in der Auffangposition geneigte Auffangfläche auf, so dass der aufgefangene Deckelgrundkörper und das aufgefangene Garantieband aufgrund der Schwerkraft automatisch weiter gefördert werden. Dadurch können gesonderte Fördermittel, die mit der Auffangeinrichtung zusammenwirken, vermieden werden.

Bei einer bevorzugten Ausführungsform weist die Dornlängsrichtung zur horizontalen Ebene eine Neigung von 10-80° auf, und die Auflagefläche der Auffangeinrichtung steht in der Auffangposition senkrecht zur Dornlängsrichtung. Die schräge Anordnung des Dorns und der Auflagefläche der Auffangeinrichtung ermöglicht eine besonders einfache Konstruktion, bei welcher insbesondere eine Einheit, welche den Dorn sowie die Lagerung der Auflagefläche umfasst zu einer Horizontalen geneigt verbaut sein kann. Die schräge Anordnung ermöglicht es zudem, dass die Zuführungsrichtung für die Verschlussdeckel in Längsrichtung des Dorns und die aufgrund der Schwerkraft vertikal nach unten gerichtete Abführungsrichtung für die Grundkörper und Garantiebänder unterschiedlich sind. Mögliche Konflikte zwischen der Zu- und der Abführung können so bereits konstruktiv minimiert werden.

Besonders bevorzugt ist eine ganze Baugruppe der Vorrichtung mit Zuführung, Dorn und Abführung insgesamt schräg angeordnet. So lässt sich insbesondere eine Vorrichtung aufbauen, welche als einzige bewegliche Elemente das hülsenförmige Mitnahmeelement und die Auffangeinrichtung umfasst, die restlichen Bewegungen des zu prüfenden Verschlussdeckels und der zu entsorgenden Grundkörper und Garantiebänder werden durch die Schwerkraft bewirkt.

Alternativ ist auch eine vertikale oder annähernd vertikale Anordnung des Dorns möglich: Mit einer entsprechend beweglichen Auffangeinrichtung kann das abzuführende Material aus dem Zuführungsweg für die Verschlussdeckel wegbefördert werden, und durch ein Durchtrennen des Garantiebandes in ausreichend viele Teile (z. B. mindestens 2 oder 3 Teile) lässt sich sicherstellen, dass das Band nicht am Dorn verbleibt, sondern aufgrund der Schwerkraft auf die Auffangeinrichtung fällt. Auch eine horizontale Anordnung des Dorns bzw. eine geneigte Anordnung mit einem Winkel von unter 10° ist möglich. In diesem Fall kann es sinnvoll sein, eine gesonderte Ausrichtung zum Lösen des Deckelgrundkörpers vom Dorn vorzusehen, z. B. einen im Dorn gelagerten Ausstossmechanismus. In diesem Fall kann es zudem von Vorteil sein, wenn das Garantieband an mehreren Stellen durchtrennt wird, so dass sich alle Teile sicher vom Dorn lösen.

Die Erfindung ist nicht auf Ausführungsformen mit einem Dorn zum Aufspannen des Verschlussdeckels beschränkt. Statt eines Dorns sind andere Anschlagelemente möglich, z. B. Greifer, welche den Deckelgrundkörper von aussen ergreifen und mechanische und/oder pneumatische Halteeinrichtungen umfassen. Auch das Mitnahmeelement kann - bei einem dornartigen oder anderen Anschlagelement - anders ausgebildet sein und z. B. an einer separaten linearen Führung geführt sein.

Bevorzugt ist die Auffangeinrichtung durch Rotation um eine Achse parallel zur Dornlängsrichtung in die Auffangposition bewegbar. Dadurch ergibt sich eine schnelle und einfache Bewegung. Das entsprechende Einschwenken kann sehr schnell erfolgen. Wenn die Auffangeinrichtung wie oben beschrieben eine geneigte Auffangfläche aufweist, rutschen die aufgefangenen Teile aufgrund der Schwerkraft von der Auffangfläche weg, beispielsweise in eine darunterliegende Öffnung, die den Weg in einen Auffangbehälter freigibt. Die Teile befinden sich somit beim Zurückschwenken nicht mehr auf der Auffangfläche, so dass auch diese erneute Schwenkbewegung (der leeren Auffangeinrichtung) mit hoher Geschwindigkeit erfolgen kann.

Die Auffangeinrichtung kann auch auf andere Weise in die Auffangposition gebracht werden, beispielsweise durch eine Schwenkbewegung um eine Achse, die einen Winkel zur Dornlängsrichtung aufweist, oder durch eine lineare Bewegung.

Mit Vorteil umfasst die Vorrichtung eine Auswerteeinheit zum Empfangen von Messwerten der Messungen der Abreisskraft, zum Feststellen anhand dieser Messwerte, ob die Verbindung des Garantiebands mit dem Deckelgrundkörper vorgegebene Eigenschaften erfüllt und zum Ausgeben von Ergebnissen dieser Feststellung. Die Ausgabe kann über ein integriertes Ausgabegerät erfolgen. So kann das Ergebnis auf einen Bildschirm optisch dargestellt und/oder über einen Lautsprecher akustisch ausgegeben werden. Die Ausgabe kann auch über eine Schnittstelle erfolgen, die mit einem Ausgabegerät, einem Gerät zur Weiterverarbeitung und/oder Speicherung der Informationen oder mit einer Maschinensteuerung verbindbar ist.

Im einfachsten Fall wird derjenige Wert der Abreisskraft bestimmt und ausgegeben bzw. weitergeleitet, welcher zum Abreissen oder Durchtrennen des Garantiebandes geführt hat. Es handelt sich dabei in der Regel um den maximalen Kraftwert, welcher während eines Prüfvorgangs gemessen wurde. (Bei besonderen Geometrien des Garantiebands und dessen Verbindung mit dem Grundkörper kann die maximale Kraft bereits vor dem eigentlichen Abreissen oder Durchtrennen auftreten. Auch in diesen Fällen ist aber die maximale Kraft ein taugliches Mass zur Beurteilung der korrekten Ausbildung der Verbindung zwischen Garantieband und Grundkörper.)

Bevorzugt ist nun aber von der Auswerteeinheit anhand mehrerer empfangener Messwerte für dieselbe Verbindung auch feststellbar, ob einer von mehreren Stegen der Verbindung eine verglichen mit anderen Stegen der Verbindung erheblich reduzierte oder erhöhte Abreisskraft aufweist. Dazu werden mehrere Kraftwerte bestimmt und analysiert. Das frühzeitige oder verzögerte Abreissen eines Stegs äussert sich in der Regel durch mehrere (lokale) Kraftmaxima. Liegen solche vor und weisen sie einen bestimmten minimalen Abstand im Kraft-Weg- bzw. Kraft-Zeit-Verlauf auf, kann auf ein nicht-standardgemässes Abreissen und damit auf einen möglichen Produktionsfehler geschlossen werden. Die mehreren empfangenen Messwerte können vor der Analyse vorbearbeitet werden, z. B. kann eine Mittelwertbildung erfolgen, es kann eine Standardabweichung oder Ableitung berechnet oder es werden andere statistische Berechnungen vorgenommen.

Bevorzugt umfasst die Vorrichtung
d) eine Zufuhreinrichtung zur automatischen Zufuhr des Verschlussdeckels zum Mitnahmeelement und zum Anschlagelement; und
e) eine Abfuhreinrichtung zur automatischen Abfuhr des Deckelgrundkörpers und des abgerissenen Garantiebandes vom Mitnahmeelement und/oder dem Anschlagelement.

Die Vorrichtung kann so vollautomatisch eingesetzt werden und namentlich unmittelbar an eine Anlage zur Herstellung von Verschlussdeckeln mit Garantiebändern angekoppelt werden. Beispielsweise werden im Anschluss an diejenige Station, in welcher die Garantiebänder hergestellt oder fertiggestellt werden, periodisch Verschlussdeckel ausgeleitet (z. B. mit Hilfe einer Blaseinheit) und zur Zufuhreinrichtung der Vorrichtung geführt. So kann beispielsweise jede Minute oder alle 30 s (oder noch häufiger) eine Prüfung vorgenommen werden. Grundsätzlich lassen sich mit einer entsprechend ausgebildeten und betriebenen erfindungsgemässen Vorrichtung bis zu 10 Verschlussdeckel pro Minute (oder sogar noch mehr) prüfen. Herkömmliche manuelle Kontrollen wurden oft nur halbstündlich oder gar nur stündlich vorgenommen. Bei einer Produktionsrate von bis zu 3'500 Deckeln pro Minute betrug der mögliche Ausschuss im schlechtesten Fall somit bis zu 210'000 Verschlussdeckel.

Zeigt die Prüfung Probleme an, können umgehend entsprechende Massnahmen an der Anlage vorgenommen werden. Dadurch wird der Ausschuss minimiert. (Falls die Garantiebänder gesondert vom Formungsprozess der Verschlussdeckel ausgebildet werden, lässt sich beispielsweise bei einer kontinuierlich arbeitenden Anlage beim Feststellen eines Fehlers die Station zur Herstellung der Garantiebänder umgehend ausschalten, wobei die angeförderten Verschlussdeckel zunächst in einen Auffangbehälter gefördert werden. Je nach Zeitbedarf für die notwendigen Wartungs- oder Instandstellungsmassnahmen können die vorgeordneten Teile der Anlage weiterlaufen oder kontrolliert angehalten werden. Die noch nicht mit dem Garantieband versehenen Verschlussdeckel werden dann zu einem späteren Zeitpunkt der entsprechenden Station zugeführt.)

Eine erfindungsgemässe Anlage zum Schneiden eines Garantiebands zur Originalitätssicherung eines Verschlussdeckels, umfasst
- eine Schneideinrichtung zum Erzeugen umfangsseitiger Schnitte zur Bildung des Garantiebands an einem Deckelgrundkörper des Verschlussdeckels; und
- eine nachfolgend zur Schneideinrichtung angeordnete Prüfvorrichtung mit einer automatischen Zufuhreinrichtung und einer automatischen Abfuhreinrichtung zum Prüfen einer Verbindung des Garantiebands mit dem Deckelgrundkörper,
wobei eine Zufuhr des Verschlussdeckels von der Schneideinrichtung zur Vorrichtung zum Prüfen automatisch erfolgt.

Mit Vorteil ist bei einer solchen Anlage die Auswerteeinheit an eine Steuereinrichtung der Anlage signalmässig gekoppelt, so dass die Ergebnisse der Feststellung an die Steuereinrichtung übermittelbar sind. Die Prüfvorrichtung lässt sich so vollständig in die Anlage integrieren. Es können die vorhandenen Ausgabe- oder Verarbeitungsgeräte der Anlage genutzt werden, und Massnahmen in der Anlage können automatisch ausgelöst werden.

Bei einer bevorzugten Ausführungsform der erfindungsgemässen Anlage ist die Steuereinrichtung derart ausgebildet, dass in Abhängigkeit der übermittelten Ergebnisse ein Verarbeitungsparameter der Schneideinrichtung, insbesondere eine Temperatur eines Schneidmessers der Schneideinrichtung, beeinflussbar ist.

Es hat sich gezeigt, dass beim Betrieb einer solchen Schneideinrichtung für Verschlussdeckel aus Kunststoff die Schärfe des Schneidmessers, welche sich während des Betriebs aufgrund der Abnutzung ändert, und die Temperatur des Schneidmessers, welche sich mit Hilfe einer steuerbaren Heizung beeinflussen lässt, die kritischen Grössen für das Arbeitsergebnis sind. Namentlich kann ein Schärfeverlust des Schneidmessers zu einem gewissen Grad durch eine erhöhte Temperatur kompensiert werden. Ergeben sich als durch einen Schärfeverlust weniger tiefe oder unvollständige Schlitze, führt dies zu einer erhöhten Abreisskraft, die zum Ab- oder Durchtrennen des Garantiebandes notwendig ist. Dies wird von der Prüfvorrichtung festgestellt und an die Steuereinrichtung der Anlage übermittelt. Letztere kann dann die Heizung des Schneidmessers hochregeln, um die Temperatur des Schneidmessers zu erhöhen, bis wieder befriedigende Werte der Abreisskraft resultieren.

Falls das Schneidmesser bereits auf eine vorgegebene maximale Temperatur beheizt wird, kann bei der Feststellung nicht-standardgemässer Verschlussdeckel ein Messerwechsel bzw. ein Nachschleifvorgang für das Messer ausgelöst werden. Diese Massnahmen können automatisch in der Schneideinrichtung oder manuell ausgeführt werden.

Alternativ oder zusätzlich zur Temperatur kann auch eine Zustellung des Schneidmessers in Abhängigkeit der übermittelten Ergebnisse gesteuert werden.

Es kann von Vorteil sein, wenn eine Zuordnung eines geprüften Verschlussdeckels zu einem Teilwerkzeug der Schneideinrichtung, welches beim Schneiden des Garantiebands mit dem Verschlussdeckel zusammengewirkt hat, und/oder zu einer Kavität einer Spritzgussform vorgenommen wird, so dass anhand der Messungen der Abreisskraft festgestellte Fehlfunktionen diesem Teilwerkzeug und/oder der Kavität zuordenbar sind. Bei bekannten Schneideinrichtungen sind Schneidmesser mit bogenförmiger Schneide umfangsseitig stationär angeordnet, und die zu verarbeitenden Schlussdeckel werden von mehreren auf einem Drehtisch angeordneten drehbaren Spanndornen diesen Schneidmessern entlang geführt. Die erwähnte Zuordnung ermöglicht in diesem Fall die Feststellung, ob bei einer dieser Spanndorne eine Fehlfunktion vorliegt. Ebenso kann eine nicht konforme benötigte Abreisskraft auf ein Problem mit der Kavität einer zur Herstellung des Verschlussdeckels benutzten Spritzgussform hinweisen. Die Zuordnung zur Kavität erfolgt insbesondere, indem vor der Prüfung des Garantiebands der betreffende Verschlussdeckel mittels einer Kamera optisch derart erfasst wird, dass eine im Deckel eingravierte Kennung der Kavität ausgelesen und an die Prüfvorrichtung oder direkt an eine übergeordnete Steuerung weitergegeben werden kann.

Die erfindungsgemässe Vorrichtung zum Prüfen ist nicht nur im Zusammenhang mit Schneideinrichtungen einsetzbar, sondern auch mit anderen Einrichtungen zur Herstellung von Garantiebändern, z. B. Stanzeinrichtungen oder Spritzgiessmaschinen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Abbildung eines Verschlussdeckels mit Garantieband;
- Fig. 2: eine erste Schrägansicht einer erfindungsgemässen Vorrichtung zum Prüfen der Verbindung des Garantiebands mit dem Deckelgrundkörper;
- Fig. 3: eine zweite Schrägansicht der Vorrichtung;
- Fig. 4: eine Querschnittsdarstellung des Dorns, der Mitnahmehülse und der Schneidmesser;
- Fig. 5: ein Schrägbild der Mitnahmehülse;
- Fig. 6-10: schematische Darstellungen der erfindungsgemässen Vorrichtung zur Erläuterung des mit der Vorrichtung durchgeführten Prüfverfahrens;
- Fig. 11: ein Kraft-Weg-Diagramm eines Prüfvorgangs; und
- Fig. 12: ein Blockdiagramm einer Anlage zum Herstellen von Garantiebändern mit einer erfindungsgemässen Prüfvorrichtung.

Grundsätzlich sind in den Figuren gleiche Teile mit gleichen Bezugszeichen versehen.

### Wege zur Ausführung der Erfindung

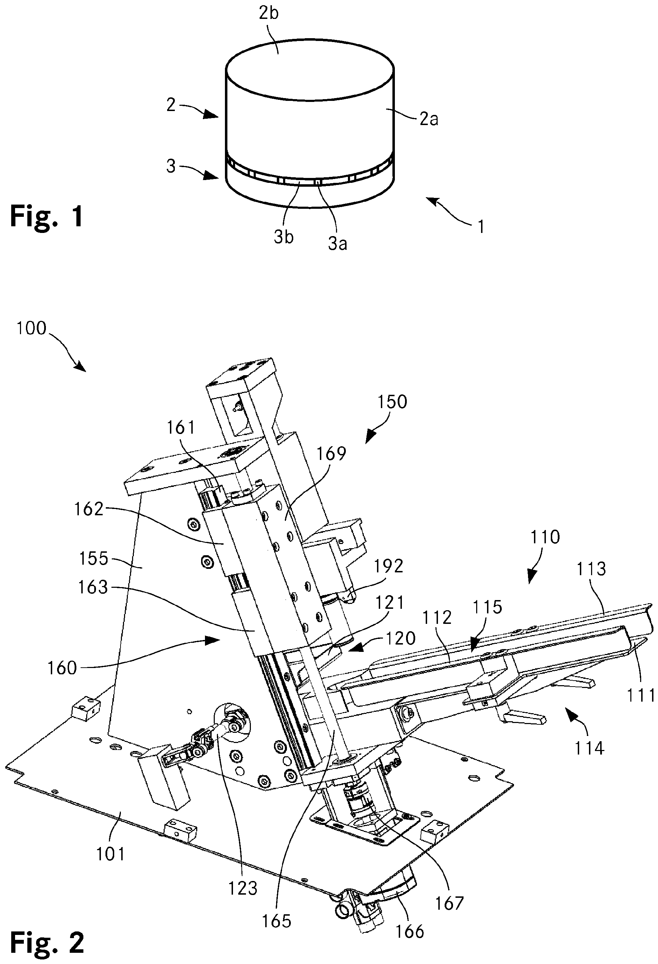

Die Figur 1 zeigt eine schematische Abbildung eines Verschlussdeckels mit Garantieband. Der Verschlussdeckel 1 umfasst einen Deckelgrundkörper 2, welcher aus einem kreiszylindrischen Mantel 2a und einem Boden 2b gebildet ist, sowie ein Garantieband 3 mit einem bandförmigen Teil, welches über mehrere Stege 3a mit dem Mantel 2a des Deckelgrundkörpers 2 verbunden ist. Der bandförmige Teil ist nach innen verdickt, so dass sich hinter dem bandförmigen Teil in Richtung des Bodens 2b ein Hinterschnitt ergibt. Im Zusammenhang mit dem beschriebenen Ausführungsbeispiel wird davon ausgegangen, dass der Verschlussdeckel 1 aus Kunststoff (insbesondere Polyethylen PE oder Polypropylen PP) hergestellt ist und in an sich bekannter Weise ein Innengewinde zum Aufschrauben auf eine Flasche, insbesondere eine Getränkeflasche aus PET oder Glas, aufweist. Der Verschlussdeckel 1 wird im Spritzgussverfahren gefertigt, das Garantieband 3 wird anschliessend hergestellt, indem mittels einer Schneideinrichtung Schlitze 3b zwischen den verbleibenden Stegen 3a eingebracht werden und indem ein unterer Abschnitt des bandförmigen Teils nach innen hochgeklappt wird, so dass sich die Verdickung ergibt.

Die Erfindung lässt sich auch mit andersartigen Deckeln einsetzen, z. B. mit solchen aus Metallblech oder mit solchen, bei welchen das Garantieband ohne zusätzlichen Schneidprozess bereits während des Spritzgiessens ausgebildet wird.

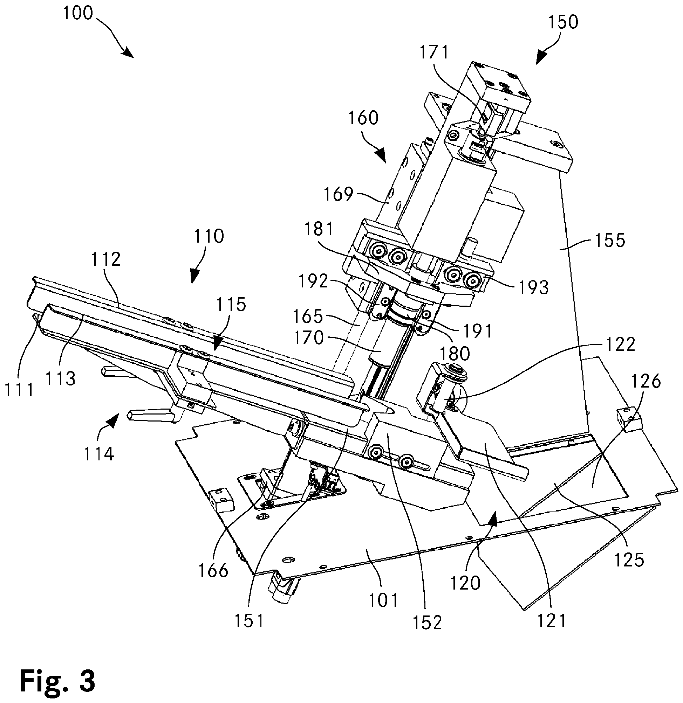

Die Figur 2 zeigt eine erste Schrägansicht einer erfindungsgemässen Vorrichtung zum Prüfen der Verbindung des Garantiebands mit dem Deckelgrundkörper, die Figur 3 eine zweite Schrägansicht von der gegenüberliegenden Seite.

Die Prüfvorrichtung 100 umfasst eine Grundplatte 101, auf welcher eine Zuführung 110, eine Abführung 120 und dazwischen eine Prüfeinheit 150 angeordnet sind. Die Zuführung 110 umfasst ein schräg zur Grundplatte 101 der Prüfvorrichtung 100 angeordnetes Bodenteil 111, welches eine ebene obere Fläche aufweist. Die Zuführung 110 umfasst weiter zwei Seitenteile 112, 113, deren gegenseitiger Abstand mittels einer Einstellvorrichtung 114 veränderbar ist. Zusammen mit dem Bodenteil 111 bilden die beiden Seitenteile 112, 113 einen Führungskanal 115 für die Verschlussdeckel, in welchem diese aufgrund der Schwerkraft auf die Prüfeinheit 150 zu gefördert werden. Durch die Verstellung der seitlichen Position der Seitenteile 112, 113 lässt sich der Kanal an unterschiedliche Deckelgrössen anpassen.

Die Abführung 120 umfasst einen Tisch 121, welcher an einer Achse 122 drehbar gelagert ist. Die Achse 122 steht senkrecht zur Tischebene und auch zur Ebene des Bodenteils 111 der Zuführung 110. Der Tisch 121 weist einen exzentrischen Vorsprung auf, mit welchem das Ende einer Kolbenstange eines Pneumatikzylinders 123 über ein schwenkbares Lager verbunden ist. Durch Betätigen des Pneumatikzylinders lässt sich der Tisch 121 um die Achse 122 verschwenken. Die Abführung 120 umfasst des Weiteren eine Öffnung 125 in der Grundplatte 101 der Vorrichtung 100 sowie ein geneigtes Abführblech 126, welches sich an die Öffnung 125 anschliesst.

Die Prüfeinheit 150 umfasst eine Bodenplatte 151, auf welcher ein Anschlagteil 152 linear verschieblich gelagert ist. Die Bodenplatte 151 der Prüfeinheit 150 ist schräg ausgerichtet, parallel zur oberen Fläche des Bodenteils 111 der Zuführung 110. Die beiden Teile sind zudem so relativ zueinander angeordnet, dass auf dem Bodenteil 111 aufgrund der Schwerkraft herunterrutschende Verschlussdeckel auf die Bodenplatte 151 der Prüfeinheit 150 gefördert werden und dort aufgrund der Seitenteile 112, 113 der Zuführung 110 und des Anschlagteils 152 der Prüfeinheit 150 eine vorgebbare Position einnehmen.

Die Prüfeinheit 150 umfasst weiter eine auf der Grundplatte 101 der Prüfvorrichtung 100 angeordnete Abstützplatte 155, welche eine schräge Stützfläche ausbildet, deren Ebene senkrecht zu der von der Bodenplatte 151 definierten Ebene verläuft. Auf der Stützfläche der Abstützplatte 155 ist eine Schiene 161 einer Linearführung 160 befestigt. Auch eine Spindel 165 mit dem zugehörigen Antrieb, einem Servomotor 166, ist an ihrem oberen Ende an der Abstützplatte 155 und an ihrem unteren Ende an einem mit der Grundplatte 101 der Prüfvorrichtung 100 verbundenen Lagerelement gelagert. Der Servomotor 166 (oder alternativ ein Schrittmotor) ist unterhalb der Grundplatte 101 angeordnet und über eine Kupplung 167 mit der Spindel 165 verbunden. Die Längsachse der Spindel 165 verläuft parallel zur Stützfläche und damit zur Schiene 161 der Linearführung 160.

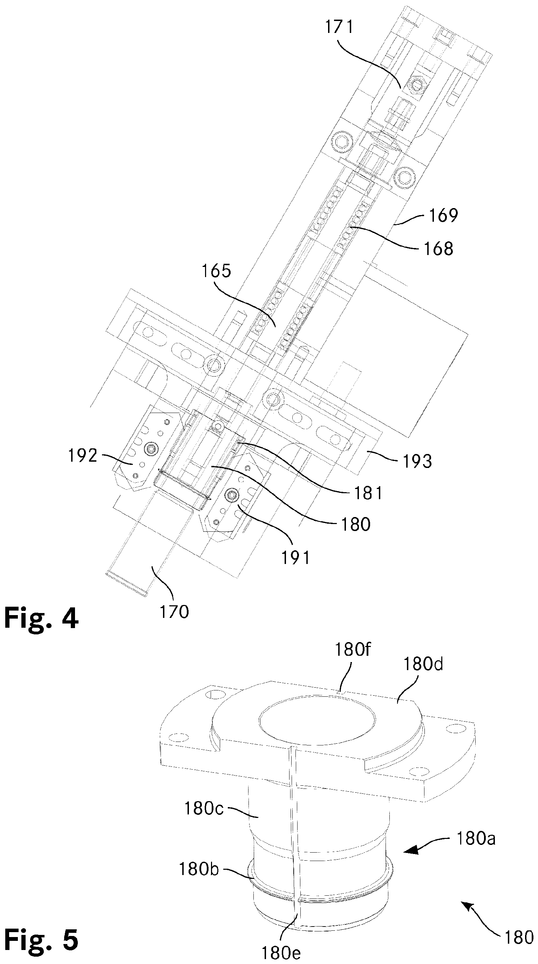

Die Spindel 165 wirkt mit einem Kugelumlauf 168 zusammen (vgl. Figur 4), welcher in einem Gehäuse 169 aufgenommen ist. Das Gehäuse 169 ist fest mit Führungselementen 162, 163 verbunden, die mit der Schiene 161 zusammenwirken. Durch Betätigen der Spindel 165 mittels des Servomotors 166 kann das Gehäuse 169 entlang der Schiene 161 bewegt werden.

Die Prüfeinheit 150 umfasst weiter einen ortsfesten, kreiszylindrischen Dorn 170, welcher über eine Kraftmesseinheit 171 mit der Abstützplatte 155 verbunden ist. Die Längsausdehnung des Dorns 170 verläuft parallel zur Stützfläche, zur Schiene 161 und zur Spindel 165. Die Kraftmesseinheit 171 misst auf die Stirnfläche des Dorns 170 übertragene Druckkräfte.

Am Gehäuse 169, welches mit Hilfe der Linearführung 160 entlang der Schiene 161 bewegbar ist, ist über eine Halterung 181 eine Mitnahmehülse 180 angeordnet. Diese ist in der Figur 5 im Detail dargestellt. Die Mitnahmehülse 180 weist einen zylindrischen Abschnitt auf mit einem Kontaktbereich 180a für einen Verschlussdeckel, in welchem ein Wulst 180b zum Hintergreifen des Garantiebandes ausgebildet ist. Hinten an den Kontaktbereich 180a schliesst sich ein Schaftbereich 180c an, der in einen Befestigungsflansch 180d übergeht. Mit dem Befestigungsflansch 180d ist die Mitnahmehülse 180 auswechselbar an der Halterung 181 befestigt. Weiter weist die Mitnahmehülse 180 zwei axiale Nuten 180e, 180f auf, die einander gegenüberliegend am Aussenmantel, vom Befestigungsflansch 180d über den Schaftbereich 180c bis in den Kontaktbereich 180a verlaufend angeordnet sind.

Die Mitnahmehülse 180 umschliesst den Dorn 170 koaxial. Mit Hilfe der Linearführung 160 lässt sich die Mitnahmehülse 180 entlang des Dorns 170 bewegen. Diese Situation ist u. a. im Querschnitt gemäss der Figur 4 dargestellt.

Über eine Halterung 193 an der Abstützplatte 155 angeordnet sind ferner zwei Schneidmesser 191, 192, deren Schneiden sich in einem vorgegebenen Abstand parallel zum Mantel des Dorns 170 erstrecken. Die Schneidmesser 191, 192 sind wie der Dorn 170 stationär angeordnet und alle drei Elemente weisen einen festen Ortsbezug auf. Die Schneidmesser 191, 192 und die Mitnahmehülse 180 sind so angeordnet, dass die Schneiden der Schneidmesser 191, 192 in den Nuten 180e, 180f der Mitnahmehülse 180 aufgenommen sind, wenn die Mitnahmehülse 180 über den Bereich der Schneidmesser 191, 192 bewegt wird. Die Mitnahmehülse 180 lässt sich somit von einer Position vollständig unterhalb der Schneidmesser 191, 192 bis in eine Position vollständig oberhalb der Schneidmesser 191, 192 bewegen. Falls ein Garantieband von der Mitnahmehülse 180 mitgenommen ist, indem der Wulst 180b mit dem nach innen ragenden Abschnitt bzw. der Verdickung des Garantiebandes zusammenwirkt, wird das Band an zwei diametral gegenüberliegenden Stellen durch die beiden Schneidmesser 191, 192 zerschnitten, so dass zwei bogenförmige Abschnitte von je 180° gebildet werden.

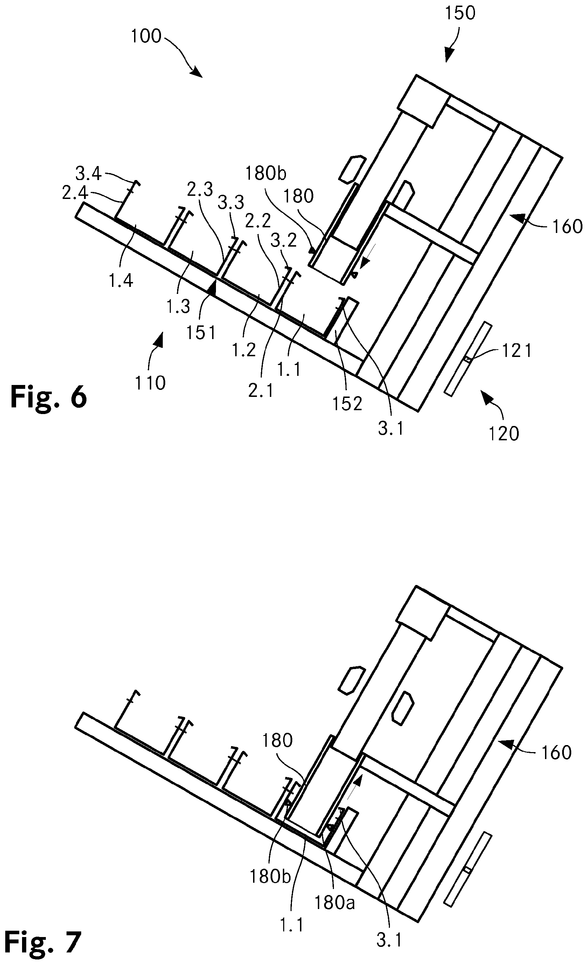

Das mit der erfindungsgemässen Vorrichtung durchgeführte Prüfverfahren wird anhand der schematischen Darstellungen der Figuren 6-9 erläutert. Die Figur 6 zeigt die Vorrichtung 100 in einer Ausgangsstellung. Die Zuführung 110 und die Bodenplatte 151 der Prüfeinheit 150 sind mit Verschlussdeckeln 1.1...1.4 bestückt. Diese liegen mit dem Boden des Deckelgrundkörpers 2.1...2.4 auf den entsprechenden geneigten Flächen auf, die Öffnung und das Garantieband 3.1...3.4 weisen nach oben. Der vorderste Verschlussdeckel 1.1 liegt am Anschlagteil 152 an, was zusammen mit den hier nicht dargestellten Seitenführungen der Zuführung 110 dessen Position eindeutig festlegt.

Die Mitnahmehülse 180 mit dem symbolisch dargestellten Wulst 180b befindet sich in einer teilweise zurückgezogenen Position, in welcher sie keinen Kontakt mit dem vordersten Verschlussdeckel 1.1 hat. Der Tisch 121 der Abführung 120 befindet sich im zurückgeschwenkten Zustand (wie er auch in der Figur 3 dargestellt ist).

Die Mitnahmehülse 180 wird nun mit Hilfe der Linearführung 160 nach unten bewegt, bis ihr Kontaktbereich 180a mit dem Wulst 180b in den vordersten Verschlussdeckel 1.1 eingedrungen ist. Der Wulst 180b drückt dabei den nach innen ragenden Teil des Garantiebandes 3.1 temporär radial nach aussen. Aufgrund seiner Elastizität schnappt er unmittelbar nach dem Durchgang des Wulstes 180b wieder nach innen zurück, so dass der Wulst 180b hinter einem entsprechenden Hinterschnitt positioniert ist. Es ergibt sich die in der Figur 7 gezeigte Situation.

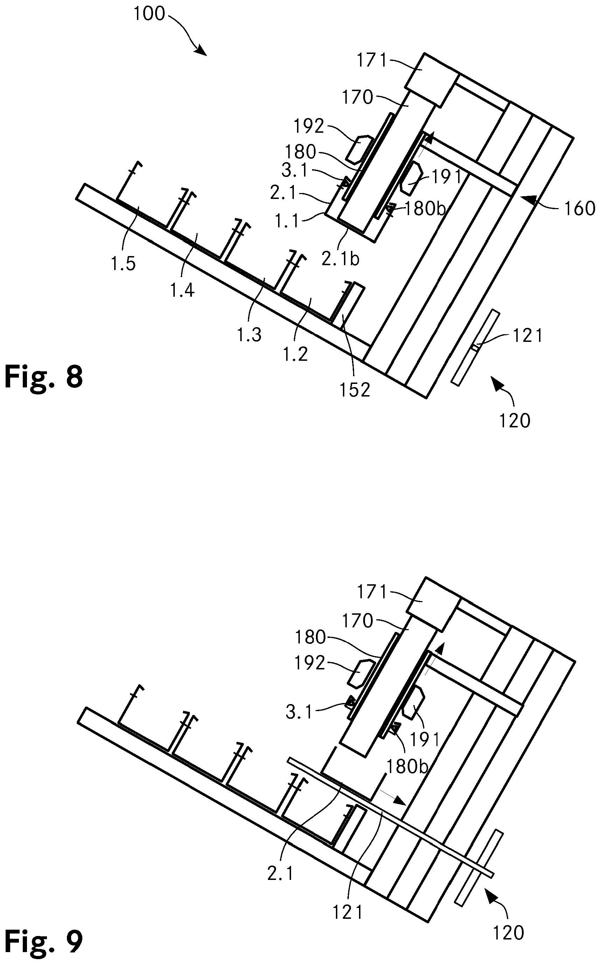

Die Mitnahmehülse 180 wird nun mit Hilfe der Linearführung 160 nach oben verfahren. Der vorderste Verschlussdeckel 1.1 wird aufgrund des hinter dem Garantieband 3.1 gehaltenen Wulstes 180b der Mitnahmehülse 180 mitgenommen. Sobald der vorderste Verschlussdeckel 1.1 den Weg freigegeben hat, rutscht aufgrund der Schwerkraft der nachfolgende Verschlussdeckel 1.2 bis zum Anschlagteil 152 nach. Nach entsprechender Bewegung der Mitnahmehülse 180 ergibt sich die in der Figur 8 gezeigte Situation, in welcher der Boden 2.1b des Deckelgrundkörpers 2.1 die Stirnseite des Dorns 170 flächig kontaktiert. Bevor Kräfte zwischen dem Dorn 170 und dem Verschlussdeckel 1.1 übertragen werden, erfolgt eine erste Kraftmessung mit Hilfe der Kraftmesseinheit 171. Der entsprechende Wert bildet einen Referenzwert für nachfolgende Messungen, indem die Differenz zwischen später gemessenen Werten und diesem Referenzwert die aufgrund der Wechselwirkung zwischen Dorn 170 und Verschlussdeckel 1.1 resultierende Abreisskraft angibt.

Der Tisch 121 der Abführung 120 wird nun mittels des entsprechenden Pneumatikzylinders unter den Dorn 170 eingeschwenkt. Die Einschwenkbewegung kann durch das Erreichen einer vorgegebenen Höhe durch die Mitnahmehülse ausgelöst werden.

Bei einer weiteren Bewegung der Mitnahmehülse 180 nach oben ergibt sich eine wachsende Abreisskraft zwischen dem auf dem Dorn 170 abgestützten Deckelgrundkörper 2.1 und dem am Wulst 180b gehaltenen Garantieband 3.1. Während dieser weiteren Bewegung wird die Abreisskraft durch die Kraftmesseinheit 171 gemessen, und die entsprechenden Kraftwerte werden an eine Verarbeitungseinheit weitergegeben. Bei einem gewissen Weg der Mitnahmehülse 180 und einer entsprechenden gewissen Abreisskraft reisst das Garantieband 3.1 vom Deckelgrundkörper 2.1 ab. Es fällt dann aufgrund der Schwerkraft auf den eingeschwenkten Tisch 121 der Abführung 120. Aufgrund der Schwerkraft rutscht es auf dem Tisch 121 bis zu dessen unteren Ende und fällt dann durch die Öffnung 125 auf das Abführblech 126 und von dort in einen Aufnahmebehälter (vgl. Figur 3).

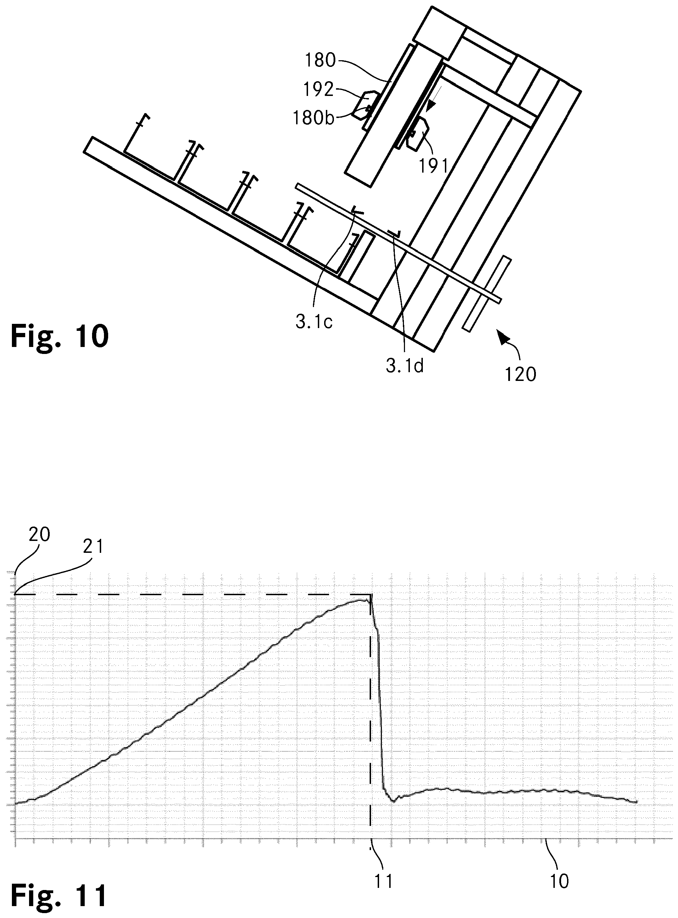

Die Mitnahmehülse 180 wird aus der in der Figur 9 dargestellten Situation weiter nach oben bewegt, wobei sie mit dem am Wulst 180b gehaltenen Garantieband 3.1 die Schneidmesser 191, 192 passiert. Das Garantieband 3.1 wird durch die beiden Schneidmesser 191, 192 in zwei Teile 3.1c, 3.1d zerschnitten. Da diese nicht mehr durch den Wulst 180b zurückgehalten werden, fallen sie aufgrund der Schwerkraft nach unten auf den Tisch 121 der Abführung 120, vgl. Figur 10. Auch sie rutschen auf dem Tisch 121 bis zu dessen unteren Ende und fallen dann durch die Öffnung 125 auf das Abführblech 126 und von dort in den Aufnahmebehälter. Die Bewegung der Mitnahmehülse 180 wird nun umgekehrt, d. h. diese bewegt sich nun wieder nach unten. Der Tisch 121 der Abfuhr 120 wird zudem mittels des Pneumatikzylinders zurückgeschwenkt. Es ergibt sich wieder die in der Figur 6 gezeigte Ausgangsposition.

Die Geschwindigkeit der linearen Bewegung der Mitnahmehülse 180 kann in den verschiedenen Phasen des beschriebenen Kreisprozesses unterschiedlich gewählt werden. So ist beispielsweise folgender Ablauf möglich:

| Phase | Startposition | Endposition | Geschwindigkeit |
|---|---|---|---|
| 1 - Einfahren | 15 mm | 0 mm | -v₁ |
| 2 - Anheben | 0 mm | 75 mm | v₂ |
| 3 - Messen | 75 mm | 80 mm | v₃ |
| 4 - Schneiden | 80 mm | 120 mm | v₄ |
| 5 - Bereitstellen | 120 mm | 15 mm | -v₂ |

Dabei gilt in der Regel v₃ (Messgeschwindigkeit) < v₁ (Einfahrgeschwindigkeit) < v₄ (Schneidgeschwindigkeit) < v₂ (Eilgang). Die Messgeschwindigkeit ist in der Regel durch einen Standard vorgegeben und beträgt beispielsweise 2 mm/s, die anderen Geschwindigkeiten können im Hinblick auf eine hohe Prozesssicherheit und einen schnellen Ablauf optimiert werden. Zwischen dem Messen und dem Schneiden kann gegebenenfalls eine weitere Phase mit einer höheren als der Schneidegeschwindigkeit (z. B. im Eilgang v₂) gefahren werden.

Die Positionen sind hier von der maximal ausgefahrenen Position aus referenziert, in welcher die Stirnfläche des Dorns 170 von der Oberfläche der Bodenplatte 151 lediglich einen geringfügigen Abstand von einigen mm aufweist.

Zur Anpassung an verschiedene Geometrien des Verschlussdeckels lassen sich Elemente der beschriebenen Prüfvorrichtung einfach auswechseln, namentlich der Vorderteil des Dorns, die Hülse, die Schneidmesser und gegebenenfalls das Anschlagteil. Wie erwähnt, lässt sich die Breite des Kanals der Zuführung einstellen. Dies gilt auch für die Position des Anschlagteils, so dass dieses in der Regel nicht ausgewechselt werden muss.

Um einen sicheren Betrieb zu gewährleisten, sind mehrere Sensoren vorhanden, die hier nicht näher beschrieben werden. So ist es beispielsweise sinnvoll, die Anwesenheit und Position eines Verschlussdeckels auf der Bodenplatte zu detektieren (beispielweise mittels eines optischen Sensors), um zu vermeiden, dass der Prüfvorgang gestartet wird, wenn dies (noch) nicht der Fall ist. Ebenfalls sollte die Position des Tisches der Abführung detektiert werden, entweder durch eine Detektion der Anwesenheit des Tisches im Raum unterhalb des Dorns (bzw. der Mitnahmehülse) und/oder durch die Detektion der Stellung des Pneumatikzylinders. So wird vermieden, dass die Mitnahmehülse beim Absenken mit dem (noch) nicht weggeschwenkten Tisch kollidiert.

Die Figur 10 zeigt ein Kraft-Weg-Diagramm eines Prüfvorgangs. Entlang der horizontalen Achse 10 ist der Weg, entlang der vertikalen Achse 20 die gemessene Abreisskraft eingetragen. Es ist gut ersichtlich, dass die Abreisskraft ab dem Kontakt der Stirnseite des Dorns 170 mit dem Boden 2b des Deckelgrundkörpers 2 zunächst allmählich anwächst. In dieser Phase werden insbesondere die Stege zwischen dem Grundkörper und dem Garantieband gedehnt, was einen gewissen Kraftaufwand erfordert. Sobald das Garantieband abreisst, fällt die Abreisskraft schlagartig ab. Relevante Grössen, die sich aus dem Verlauf bestimmen lassen, sind die maximal gemessene Kraft 21 und der entsprechende Weg 11. Sie können zur Bewertung der Qualität der Verbindung zwischen Garantieband und Grundkörper herangezogen werden. Wird der Kraftverlauf detaillierter betrachtet, so ist auch sichtbar, wenn er beispielsweise mehrere wegmässig beabstandete lokale Maxima aufweist, in der Regel verbunden mit einem grösseren Wegwert bei maximaler Kraft. Dies ist ein Indiz für ein vorzeitiges Abreissen eines Stegs bzw. eines Teils der Stege. Andere Eigenheiten des Verlaufs können auf ein fehlerhaftes Einspannen des Deckels in der Prüfeinrichtung hinweisen, worauf das Ergebnis verworfen und die Messung automatisch am nächsten Deckel wiederholt werden kann.

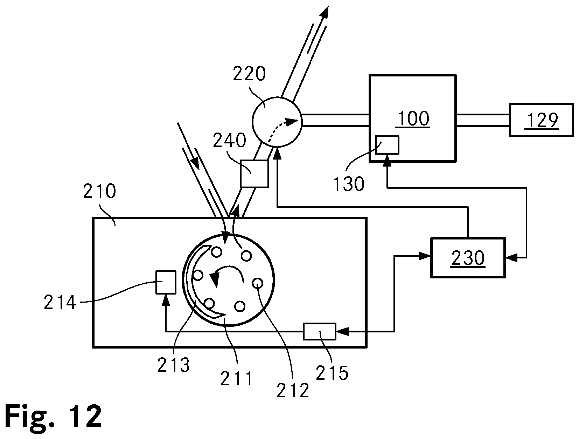

Die Figur 12 zeigt ein Blockdiagramm einer Anlage zum Herstellen von Garantiebändern mit einer erfindungsgemässen Prüfvorrichtung. Die Anlage umfasst eine Falt-/Schneidemaschine 210. Im dargestellten Beispiel umfasst diese einen Drehtisch 211 mit mehreren Spanndornen 212 (hier 6 beispielhaft angedeutet) für Verschlussdeckel und einem sektorweise mit den Spanndornen 212 zusammenwirkenden stationären Schneidmesser 213 mit kreisbogenförmiger Schneide. Das Schneidmesser 213 ist mittels einer regelbaren Heizung 214 beheizt. Die Falt-/Schneidemaschine 210 umfasst zudem eine Steuerung 215. Entsprechende Maschinen werden beispielsweise von der Anmelderin PackSys Global Ltd. angeboten, z. B. die Maschine mit der Bezeichnung SPM 35, welche mit bis zu 16 Spanndornen einen Durchsatz von bis zu 3'500 Kunststoffkappen pro Minute erreicht und das Garantieband ausgehend vom Spritzgussformling sowohl faltet als auch schneidet (mit wählbarer Reihenfolge).

Die Falt-/Schneidemaschine 210 und die weiteren Komponenten der Anlage werden durch eine Anlagesteuerung 230 gesteuert und überwacht.

Erfindungsgemäss ist nun ausgangsseitig an die Falt-/Schneidemaschine 210 eine Ausleitvorrichtung 220 angeordnet, mittels welcher einzelne Verschlussdeckel zur Prüfvorrichtung 100 geleitet werden können, während die übrigen Verschlussdeckel zur nachfolgenden Station weitergeleitet werden. Entsprechende Ausleitvorrichtungen sind grundsätzlich bekannt. Die Auswahl eines auszuleitenden Objekts erfolgt darin beispielsweise mittels eines Druckluftstosses.

Zwischen der Falt-/Schneidemaschine 210 und der Ausleitvorrichtung 220 ist eine Kamera 240 zur visuellen Erfassung der Verschlussdeckel angeordnet. Sie dient zur Erstellung von Abbildungen der einzelnen Deckel, diese erlauben dann der Anlagesteuerung 230, den jeweiligen Verschlussdeckel anhand eingeprägter oder eingravierter und visuell erfasster Identifikationsinformationen einer spezifischen Spritzgussform bzw. -kavität zuzuordnen.

In der Prüfvorrichtung 100 wird wie oben beschrieben die Verbindung zwischen Garantieband und Deckelgrundkörper geprüft. Die Deckelgrundkörper und abgetrennten Stücke des Garantiebandes werden nach der Messung in einen Behälter 129 gefördert. Die Ergebnisse der an einem Verschlussdeckel vorgenommenen Messungen werden nun von der Auswerteeinheit 130 der Prüfvorrichtung 100 über eine Schnittstelle an die Anlagesteuerung 230 übermittelt. Falls die Ergebnisse anzeigen, dass die zum Abtrennen benötigte Abreisskraft höher ist als ein vorgegebener Wert, wird die Heizung 214 angewiesen, die Temperatur des Schneidmessers 213 zu erhöhen. Ist bereits die maximale Schneidmessertemperatur erreicht oder zeigen die Ergebnisse eine Fehlfunktion der Falt-/Schneidemaschine 210 an, erfolgt eine Fehlermeldung an einen Operator. Betrifft die Fehlfunktion einen einzelnen Spanndorn 212 oder eine einzelne Spritzgusskavität, lässt sich der geprüfte Verschlussdeckel diesem bzw. dieser zuordnen, was die Instandsetzung vereinfacht. Wird die Maximaltemperatur des Schneidmessers erreicht, kann bereits eine Warnung ausgegeben werden, so dass der Austausch des Schneidmessers vorbereitet werden kann.

Die Erfindung ist nicht auf das dargestellte Ausführungsbeispiel beschränkt. So lassen sich insbesondere konstruktive Details der einzelnen Komponenten anders gestalten. Aufgrund der Geschwindigkeit des Messvorgangs und seiner Reproduzierbarkeit lässt sich die Prüfeinheit auch im manuellen Betrieb vorteilhaft einsetzen. Insbesondere die Zuführung kann in diesem Fall vereinfacht werden.

Zusammenfassend ist festzustellen, dass die Erfindung eine Vorrichtung zum Prüfen einer Verbindung eines Garantiebands einer Originalitätssicherung eines Verschlussdeckels mit einem Deckelgrundkörper schafft, welche eine schnelle Prüfung ermöglicht.

## Patentansprüche

1. Vorrichtung zum Prüfen einer Verbindung eines Garantiebands (3) einer Originalitätssicherung eines Verschlussdeckels (1) mit einem Deckelgrundkörper (2), umfassend
a) ein Mitnahmeelement (180) zum Ergreifen des Garantiebands (3);
b) ein Anschlagelement für den Deckelgrundkörper (2), wobei das Mitnahmeelement (180) und das Anschlagelement derart relativ zueinander beweglich sind, dass eine Abreisskraft auf das Garantieband (3) ausübbar ist und wobei das Anschlagelement stirnseitig an einem Dorn (170) ausgebildet ist;
c) eine Kraftmessvorrichtung (171) zur Messung der Abreisskraft während der Relativbewegung des Garantiebands (3) und des Deckelgrundkörpers (2);
d) wobei das Mitnahmeelement (180) hülsenförmig den Dorn umschliesst, **dadurch gekennzeichnet, dass**
e) das Mitnahmeelement (180) entlang einer Dornlängsrichtung linear relativ zum Dorn (170) beweglich ist, und
d) eine Trennvorrichtung (191, 192) zum Durchtrennen des Garantiebandes (3) nach dem Abreissen vom Deckelgrundkörper (2) ausgebildet ist.

2. Vorrichtung nach Anspruch 1, **dadurch gekennzeichnet, dass** die Trennvorrichtung (191, 192) mindestens ein im Umfangsbereich des Dorns (170) angeordnetes Schneidmesser (191, 192) umfasst, welches derart ausgebildet ist, dass das Garantieband (3) bei einer Bewegung über das Schneidmesser (191, 192), entlang der Dornlängsrichtung, durchtrennt wird.

3. Vorrichtung nach Anspruch 2, **dadurch gekennzeichnet, dass** die Trennvorrichtung (191, 192) mindestens zwei Schneidmesser (191, 192) umfasst, welche derart angeordnet sind, dass das Garantieband (3) an zwei umfangsmässig beabstandeten Stellen durchtrennt wird.

4. Vorrichtung nach Anspruch 2 oder 3, **dadurch gekennzeichnet**, das das hülsenförmige Mitnahmeelement (180) mindestens eine Nut (180e, 180f) in Dornlängsrichtung aufweist, welche mit dem mindestens einen Schneidmesser (191, 192) zusammenwirkt.

5. Vorrichtung nach einem der Ansprüche 1 bis 4, **dadurch gekennzeichnet, dass** die Dornlängsrichtung zu einer horizontalen Ebene einen Winkel von mindestens 30° aufweist, wobei eine Bewegung in Dornlängsrichtung zur Messung der Abreisskraft nach oben erfolgt und wobei die Vorrichtung eine Auffangeinrichtung (121) für den Deckelgrundkörper (2) und das abgerissene Garantieband (3) umfasst, welche unterhalb des Dorns (170) temporär in eine Auffangposition beweglich ist.

6. Vorrichtung nach Anspruch 5, **dadurch gekennzeichnet, dass** die Auffangeinrichtung (121) eine in der Auffangposition geneigte Auffangfläche aufweist, so dass der aufgefangene Deckelgrundkörper (2) und das aufgefangene Garantieband (3) aufgrund der Schwerkraft automatisch weiter gefördert werden.

7. Vorrichtung nach Anspruch 6, **dadurch gekennzeichnet, dass** die Dornlängsrichtung zur horizontalen Ebene eine Neigung von 10-80° aufweist und dass die Auflagefläche der Auffangeinrichtung (121) in der Auffangposition senkrecht steht zur Dornlängsrichtung.

8. Vorrichtung nach einem der Ansprüche 5 bis 7, **dadurch gekennzeichnet, dass** die Auffangeinrichtung (121) durch Rotation um eine Achse (122) parallel zur Dornlängsrichtung in die Auffangposition bewegbar ist.

9. Vorrichtung nach einem der Ansprüche 1 bis 8, **gekennzeichnet durch** eine Auswerteeinheit (130) zum Empfangen von Messwerten der Messungen der Abreisskraft, zum Feststellen anhand dieser Messwerte, ob die Verbindung des Garantiebands (3) mit dem Deckelgrundkörper (2) vorgegebene Eigenschaften erfüllt und zum Ausgeben von Ergebnissen dieser Feststellung.

10. Vorrichtung nach Anspruch 9, **dadurch gekennzeichnet, dass** von der Auswerteeinheit (130) anhand mehrerer empfangener Messwerte für dieselbe Verbindung feststellbar ist, ob einer von mehreren Stegen der Verbindung eine verglichen mit anderen Stegen der Verbindung erheblich reduzierte oder erhöhte Abreisskraft aufweist.

11. Vorrichtung nach einem der Ansprüche 1 bis 10, umfassend
d) eine Zufuhreinrichtung (110) zur automatischen Zufuhr des Verschlussdeckels (1) zum Mitnahmeelement (180) und zum Anschlagelement; und
e) eine Abfuhreinrichtung (120) zur automatischen Abfuhr des Deckelgrundkörpers (2) und des abgerissenen Garantiebandes (3) vom Mitnahmeelement (180) und/oder dem Anschlagelement.

12. Anlage zum Schneiden eines Garantiebands (3) zur Originalitätssicherung eines Verschlussdeckels (1), umfassend
- eine Schneideinrichtung (210) zum Erzeugen umfangsseitiger Schnitte zur Bildung des Garantiebands (3) an einem Deckelgrundkörper (2) des Verschlussdeckels (1);
- eine nachfolgend zur Schneideinrichtung (210) angeordnete Vorrichtung (100) nach Anspruch 11 zum Prüfen einer Verbindung des Garantiebands (3) mit dem Deckelgrundkörper (2),
wobei eine Zufuhr des Verschlussdeckels (1) von der Schneideinrichtung (210) zur Vorrichtung zum Prüfen (100) automatisch erfolgt.

13. Anlage nach Anspruch 12, umfassend eine Vorrichtung nach den Ansprüchen 11 sowie 9 oder 10, **dadurch gekennzeichnet, dass** die Auswerteeinheit (130) an eine Steuereinrichtung (230) der Anlage signalmässig gekoppelt ist, so dass die Ergebnisse der Feststellung an die Steuereinrichtung (230) übermittelbar sind.

14. Anlage nach Anspruch 13, **dadurch gekennzeichnet, dass** die Steuereinrichtung (230) derart ausgebildet ist, dass in Abhängigkeit der übermittelten Ergebnisse ein Verarbeitungsparameter der Schneideinrichtung (210), insbesondere eine Temperatur eines Schneidmessers (213) der Schneideinrichtung (210), beeinflussbar ist.

15. Anlage nach einem der Ansprüche 13 oder 14, **dadurch gekennzeichnet, dass** eine Zuordnung eines geprüften Verschlussdeckels (1) zu einem Teilwerkzeug (212) der Schneideinrichtung (210), welches beim Schneiden des Garantiebands (3) mit dem Verschlussdeckel (1) zusammengewirkt hat, und/oder zu einer Kavität einer Spritzgussform vorgenommen wird, so dass anhand der Messungen der Abreisskraft festgestellte Fehlfunktionen diesem Teilwerkzeug (212) und/oder der Kavität zuordenbar sind.

## Claims

1. Device for testing a connection of a guarantee strip (3) of a security seal of a closure lid (1) having a lid main body (2), comprising
a) a take-along element (180) for gripping the guarantee strip (3);
b) a stop element for the lid main body (2), wherein the take-along element (180) and the stop element are movable relative to each other in such a manner that a tear-off force can be exerted on the guarantee strip (3) and wherein the stop element is formed on the end side of a mandrel (170);
c) a force-measuring device (171) for measuring the tear-off force during the relative movement of the guarantee strip (3) and the lid main body (2);
d) wherein the take-along element (180) surrounds the mandrel in a sleeve-shaped manner,
**characterized in that**
e) the take-along element (180) is movable linearly relative to the mandrel (170) along a longitudinal direction of the mandrel; and
f) a cutting device (191, 192) is arranged for severing the guarantee strip after the latter has been torn off from the lid main body.

2. Device as claimed in claim 1, **characterized in that** the cutting device (191, 192) comprises at least one slitting knife (191, 192) which is arranged in the circumferential region of the mandrel (170) and is designed in such a manner that the guarantee strip (3) is severed as it moves over the slitting knife (191, 192), along the longitudinal direction of the mandrel.

3. Device as claimed in claim 2, **characterized in that** the cutting device (191, 192) comprises at least two slitting knives (191, 192) which are arranged in such a manner that the guarantee strip (3) is severed at two circumferentially spaced-apart points.

4. Device as claimed in claim 2 or 3, **characterized in that** the sleeve-shaped take-along element (180) has at least one groove (180e, 180f) in the longitudinal direction of the mandrel, said groove interacting with the at least one slitting knife (191, 192).

5. Device as claimed in one of claims 1 to 4, **characterized in that** the longitudinal direction of the mandrel has an angle of at least 30° with respect to a horizontal plane, wherein a movement in the longitudinal direction of the mandrel for measuring the tear-off force takes place upward and wherein the device comprises a collecting apparatus (121) for the lid main body (2) and the torn-off guarantee strip (3), said collecting apparatus being movable below the mandrel (170) temporarily into a collecting position.

6. Device as claimed in claim 5, **characterized in that** the collecting apparatus (121) has a collecting surface which is inclined in the collecting position, and therefore the collected lid main body (2) and the collected guarantee strip (3) are automatically conveyed further owing to gravity.

7. Device as claimed in claim 6, **characterized in that** the longitudinal direction of the mandrel has an inclination of 10-80° with respect to the horizontal plane and **in that** the supporting surface of the collecting apparatus (121) in the collecting position is perpendicular to the longitudinal direction of the mandrel.

8. Device as claimed in one of claims 5 to 7, **characterized in that** the collecting apparatus (121) is movable into the collecting position by rotation about an axis (122) parallel to the longitudinal direction of the mandrel.

9. Device as claimed in one of claims 1 to 8, **characterized by** an evaluation unit (130) for receiving measurement values of the measurements of the tear-off force, for determining with reference to said measurement values whether the connection of the guarantee strip (3) to the lid main body (2) meets predetermined properties and for outputting results of this determination.

10. Device as claimed in claim 9, **characterized in that** it can be determined by the evaluation unit (130) with reference to a plurality of received measurement values for the same connection whether one of a plurality of bridges of the connection has a considerably reduced or increased tear-off force in comparison to other bridges of the connection.

11. Device as claimed in one of claims 1 to 10, comprising
d) a feed apparatus (110) for automatically feeding the closure lid (1) to the take-along element (180) and to the stop element; and
e) an outfeed apparatus (120) for automatically removing the lid main body (2) and the torn-off guarantee strip (3) from the take-along element (180) and/or the stop element.

12. Installation for slitting a guarantee strip (3) for the security seal of a closure lid (1), comprising
- a slitting apparatus (210) for producing circumferential cuts in order to form the guarantee strip (3) on a lid main body (2) of the closure lid (1);
- a device (100) according to claim 11, which is arranged downstream of the slitting apparatus (210), for testing a connection of the guarantee strip (3) to the lid main body (2),
wherein the closure lid (1) is automatically fed by the slitting apparatus (210) to the device (100) for testing.

13. Installation as claimed in claim 12, comprising a device as claimed in claim 11, **characterized in that** the evaluation unit (130) is coupled in terms of signals to a control apparatus (230) of the installation such that the results of the determination can be transmitted to the control apparatus (230).

14. Installation as claimed in claim 13, **characterized in that** the control apparatus (230) is designed in such a manner that a processing parameter of the slitting apparatus (210), in particular a temperature of a slitting knife (213) of the slitting apparatus (210), can be influenced according to the transmitted results.

15. Installation as claimed in either of claims 13 and 14, **characterized in that** a tested closure lid (1) is assigned to a part-tool (212) of the slitting apparatus (210), which part-tool has interacted with the closure lid (1) during the slitting of the guarantee strip (3), and/or to a cavity of an injection mold such that malfunctions determined with reference to the measurements of the tear-off force can be assigned to said part-tool (212) and/or to the cavity.

## Revendications

1. Dispositif de contrôle d'un raccordement d'une bande d'inviolabilité (3) d'une protection d'originalité d'un couvercle de fermeture (1) avec un corps de base de couvercle (2), comprenant
a) un élément d'entraînement (180) destiné à saisir la bande d'inviolabilité (3) ;
b) un élément de butée pour le corps de base de couvercle (2), dans lequel l'élément d'entraînement (180) et l'élément de butée sont mobiles l'un par rapport à l'autre de telle sorte qu'une force d'arrachage puisse être exercée sur la bande d'inviolabilité (3) et dans lequel l'élément de butée est formé sur la face d'extrémité d'un mandrin (170) ;
c) un dispositif de mesure de force (171) destiné à mesurer la force d'arrachage pendant le mouvement relatif de la bande d'inviolabilité (3) et du corps de base de couvercle (2) ;
d) dans lequel l'élément d'entraînement (180) entoure le mandrin sous la forme d'un manchon,
**caractérisé en ce que**
e) l'élément d'entraînement (180) est mobile linéairement par rapport au mandrin (170) le long d'une direction longitudinale du mandrin, et
d) un dispositif de séparation (191, 192) est formé pour séparer la bande d'inviolabilité (3) après qu'elle a été arrachée du corps de base de couvercle (2).

2. Dispositif selon la revendication 1, **caractérisé en ce que** le dispositif de séparation (191, 192) comprend au moins une lame de coupe (191, 192) disposée dans la zone circonférentielle du mandrin (170), laquelle lame de coupe est conçue de telle sorte que la bande d'inviolabilité (3) soit sectionnée lors d'un mouvement au-dessus de la lame de coupe (191, 192), le long de la direction longitudinale du mandrin.

3. Dispositif selon la revendication 2, **caractérisé en ce que** le dispositif de séparation (191, 192) comprend au moins deux lames de coupe (191, 192) qui sont disposées de telle sorte que la bande d'inviolabilité (3) soit sectionnée en deux endroits espacés circonférentiellement.

4. Dispositif selon la revendication 2 ou 3, **caractérisé en ce que** l'élément d'entraînement (180) en forme de manchon comprend au moins une rainure (180e, 180f) dans la direction longitudinale du mandrin, qui coopère avec ladite au moins une lame de coupe (191, 192) .

5. Dispositif selon l'une quelconque des revendications 1 à 4, **caractérisé en ce que** la direction longitudinale du mandrin forme un angle d'au moins 30° par rapport à un plan horizontal, dans lequel un mouvement dans la direction longitudinale du mandrin pour mesurer la force d'arrachage est effectué vers le haut et dans lequel le dispositif comprend un dispositif de capture (121) destiné au corps de base de couvercle (2) et à la bande d'inviolabilité (3) arrachée, qui est temporairement mobile dans une position de capture sous le mandrin (170).

6. Dispositif selon la revendication 5, **caractérisé en ce que** le dispositif de capture (121) comprend une surface de capture inclinée dans la position de capture, de telle sorte que le corps de base de couvercle (2) capturé et la bande d'inviolabilité (3) capturée soient automatiquement transportés plus loin par gravité.

7. Dispositif selon la revendication 6, **caractérisé en ce que** la direction longitudinale du mandrin présente une inclinaison de 10-80° par rapport au plan horizontal et **en ce que** la surface d'appui du dispositif de capture (121) est perpendiculaire à la direction longitudinale du mandrin dans la position de capture.

8. Dispositif selon l'une quelconque des revendications 5 à 7, **caractérisé en ce que** le dispositif de capture (121) est déplaçable en position de capture par rotation autour d'un axe (122) parallèle à la direction longitudinale du mandrin.

9. Dispositif selon l'une quelconque des revendications 1 à 8, **caractérisé par** une unité d'évaluation (130) destinée à recevoir des valeurs de mesure des mesures de la force d'arrachage, à déterminer, sur la base de ces valeurs de mesure, si le raccordement de la bande d'inviolabilité (3) au corps de base de couvercle (2) répond à des caractéristiques prédéterminées, et à délivrer des résultats de ladite détermination.

10. Dispositif selon la revendication 9, **caractérisé en ce que** l'unité d'évaluation (130) peut déterminer, sur la base d'une pluralité de valeurs de mesure reçues pour le même raccordement, si l'une d'une pluralité de nervures du raccordement présente une force d'arrachage significativement réduite ou augmentée par rapport aux autres nervures du raccordement.

11. Dispositif selon l'une quelconque des revendications 1 à 10, comprenant
d) un moyen d'acheminement (110) destiné à acheminer automatiquement le couvercle de fermeture (1) vers l'élément d'entraînement (180) et vers l'élément de butée ; et
e) un dispositif de retrait (120) destiné à retirer automatiquement le corps de base du couvercle (2) et la bande d'inviolabilité (3) arrachée de l'élément d'entraînement (180) et/ou de l'élément de butée.

12. Système destiné à couper une bande d'inviolabilité (3) pour la protection d'originalité d'un couvercle de fermeture (1), comprenant
- un dispositif de coupe (210) destiné à produire des coupes circonférentielles pour former la bande d'inviolabilité (3) sur un corps de base de couvercle (2) du couvercle de fermeture (1) ;
- un dispositif (100) selon la revendication 11 disposé en aval du dispositif de coupe (210) pour contrôler un raccordement de la bande d'inviolabilité (3) au corps de base de couvercle (2),
dans lequel un acheminement du couvercle de fermeture (1) du dispositif de coupe (210) vers le dispositif de contrôle (100) s'effectue automatiquement.

13. Système selon la revendication 12, comprenant un dispositif selon les revendications 11 et 9 ou 10, **caractérisé en ce que** l'unité d'évaluation (130) est couplée par voie de signaux à un dispositif de commande (230) du système, de telle sorte que les résultats de la détermination puissent être transmis au dispositif de commande (230).

14. Système selon la revendication 13, **caractérisé en ce que** le dispositif de commande (230) est conçu de telle sorte qu'un paramètre de traitement du dispositif de coupe (210), en particulier une température d'une lame de coupe (213) du dispositif de coupe (210), puisse être influencé en fonction des résultats transmis.

15. Système selon l'une quelconque des revendications 13 ou 14, **caractérisé en ce qu'**il est procédé à une association d'un couvercle de fermeture (1) contrôlé avec un outil partiel (212) du dispositif de coupe (210), qui a coopéré avec le couvercle de fermeture (1) lors de la coupe de la bande d'inviolabilité (3), et/ou avec une cavité d'un moule d'injection, de telle sorte que des dysfonctionnements déterminés sur la base des mesures de la force d'arrachage puissent être associés à cet outil partiel (212) et/ou à la cavité.
